# EUROPÄISCHE PATENTSCHRIFT

(11) **EP 3 783 771 B1**
(45) Veröffentlichungstag und Bekanntmachung des Hinweises auf die Patenterteilung: **14.10.2026**
(21) Anmeldenummer: 20191765.5
(22) Anmeldetag: 19.08.2020
(51) Int. Cl.: H02K 1/02, H02K 1/16, H02K 1/18, H02K 15/021

(54) **STATOR FÜR EINEN ELEKTROMOTOR UND VERFAHREN ZU SEINER HERSTELLUNG**
STATOR OF AN ELECTRIC MOTOR AND METHOD FOR MANUFACTURING THE SAME
STATOR POUR UN MOTEUR ÉLECTRIQUE ET SON PROCÉDÉ DE FABRICATION

(30) Priorität: 20.08.2019 DE 102019122365
(43) Veröffentlichungstag der Anmeldung: 24.02.2021
(73) Patentinhaber: ThyssenKrupp Electrical Steel GmbH, 45881 Gelsenkirchen (DE)
(72) Erfinder: Wang, Chaoyong, 44149 Dortmund (DE)
(74) Vertreter: Cohausz & Florack

(56) Entgegenhaltungen:
- WO-A1-2014/136145
- DE-A1- 102012 207 508
- DE-A1- 102017 010 774
- US-A- 2 276 793
- US-B1- 6 960 860

## Beschreibung

Die Erfindung betrifft einen Stator für einen Elektromotor, wobei der Stator einen Statorkern umfasst, der durch ein Paket von Blechzuschnitten gebildet ist, die aus kornorientiertem Elektroblech gefertigt sind, und eine Aufnahmeöffnung umgrenzt, die zur Aufnahme eines Rotors des Elektromotors bestimmt ist, und wobei an der der Aufnahmeöffnung zugeordneten Innenseite der Blechzuschnitte zahnartige Vorsprünge vorhanden sind, die in regelmäßigen Winkelabständen um das Zentrum der Aufnahmeöffnung verteilt angeordnet sind und aus radialer Richtung auf das Zentrum der Aufnahmeöffnung zulaufen.

Ebenso betrifft die Erfindung ein Verfahren zur Herstellung eines solchen Stators.

Ein erstes Beispiel für einen Stator für eine elektrische Maschine ist in der DE 10 2012 207 508 A1 beschrieben. Der bekannte Stator weist eine Statorachse, eine um die Statorachse verlaufende Statoraußenfläche, eine Vielzahl von ersten Blechpaketen auf, die jeweils durch eine Vielzahl von senkrecht zu der Statorachse geschichteten Elektrobleche gebildet sind. Die Blechpakete besitzen eine U-förmige Struktur mit je zwei radial zur Statorachse verlaufenden Schenkeln und einer tangential zur Statoraußenfläche verlaufenden Schenkelverbindung. Je zwei Schenkel benachbarter Blechpakete bilden gemeinsam ein Wicklungsstützsegment, das jeweils eine koaxial verlaufende Wicklungsachse für jeweils eine Statorwicklung bildet. An die Statoraußenfläche sind aus kornorientierten Elektroblechzuschnitten bestehende weitere Blechpakete angelegt, die planparallel zu den Schenkelverbindungen der ersten Blechpakete ausgerichtet sind. An ihren Stoßkanten sind die Bleche der weiteren Blechpakete miteinander verschweißt, so dass sie fest an dem Stator gehalten sind. Die Vorzugsachse der Elektroblechzuschnitte der zweiten Blechpakete ist dabei entlang der magnetischen Hauptflussrichtung orientiert.

Ein Stator der hier in Rede stehenden Art ist beispielsweise aus der WO 95/10876 A1 bekannt.

Der Vorteil der Verwendung von kornorientiertem Elektroblech für die Fertigung von Blechzuschnitten, die zu einem Stator zusammengesetzt werden, besteht darin, dass kornorientiertes Elektroblech im Vergleich zu nicht-kornorientierten Elektroblechen eine besonders hohe Permeabilität in einer Vorzugsrichtung aufweist, in der die Körner des kornorientierten Blechs orientiert sind. Typischerweise fällt diese Vorzugsrichtung fertigungsbedingt mit der Richtung ("Walzrichtung") zusammen, in der das kornorientierte Elektroblech bei seiner Fertigung gewalzt worden ist. Dem Vorteil, der sich aus der besonders hohen Permeabilität ergibt, nämlich den geringen elektrischen Verlusten, steht gegenüber, dass dieser Vorteil nur in der Vorzugsrichtung auftritt. In allen davon abweichenden Richtungen treten dagegen erhöhte Verluste auf. Dies erweist sich als besonders ungünstig bei Statoren von Wechsel- oder Drehstrommotoren, bei denen in dem Stator Spulen gehalten werden, die in gleichmäßigen Winkelabständen um die Drehachse des Motors verteilt angeordnet sind und im Betrieb entsprechend angeordnete Magnetfelder erzeugen.

Um diesen Nachteil zu beseitigen, ist in der schon erwähnten WO 95/10876 A1 vorgeschlagen worden, die kreisrunden, ringförmigen Blechzuschnitte aus kreisbogenförmigen Einzelsegmenten zusammenzusetzen, die jeweils aus dem kornorientierten Elektroblech geschnitten sind. Die Erstreckung der Einzelsegmente in Umfangsrichtung der Blechzuschnitte ist dabei so bemessen, dass, nachdem die Einzelsegmente zu dem jeweiligen Blechzuschnitt zusammengesetzt sind, die Vorzugsrichtung, in der die Körner des kornorientierten Elektroblechs orientiert sind, aus dem das jeweilige Einzelsegment besteht, an jeder Stelle des betreffenden Einzelsegments um weniger als 25° abweicht von der bezogen auf das Zentrum der Aufnahmeöffnung des Stators radialen Richtung. Auf diese Weise lassen sich auch aus kornorientiertem Blech Statoren fertigen, die einen Wirkungsgrad der mit ihnen gebauten Elektromotoren ermöglichen, der dem Wirkungsgrad von Elektromotoren überlegen ist, deren Stator aus nicht kornorientiertem Elektroblech gefertigt ist.

Als besonders vorteilhaft erweist sich die segmentierte Fertigung der aus kornorientiertem Elektroblech bestehenden Blechzuschnitte bei Statoren der eingangs angegebenen Art, die an ihrer zum Zentrum der Aufnahmeöffnung gerichteten Innenseite zahnartige Vorsprünge aufweisen, die von einem um die Aufnahmeöffnung umlaufenden Basisabschnitt der Blechzuschnitte getragen sind. Dabei sind die Vorsprünge in regelmäßigen Winkelabständen um das Zentrum der Aufnahmeöffnung verteilt angeordnet und laufen jeweils aus radialer Richtung auf das Zentrum der Aufnahmeöffnung zu.

Beim fertig zusammengesetzten Stator bilden die jeweils aneinander anliegenden zahnartigen Vorsprünge der Blechzuschnitte gemeinsam Leisten, die sich achsparallel zur Längsachse der Aufnahmeöffnung des Stators erstrecken. Jeweils zwei benachbarte Leisten begrenzen so zwischen sich eine Nut. In die Nuten werden beim Bau des Elektromotors Wicklungen eines elektrischen Leiters gelegt, durch die der zum Betrieb des Elektromotors benötigte Strom geleitet wird. Im Bereich der die Wicklungen seitlich begrenzenden zahnartigen Vorsprünge fließt der magnetische Fluss dann jeweils mit einer maximalen Abweichung von weniger als 25° in Richtung der Vorzugsrichtung des kornorientierten Blechs, aus dem die Blechzuschnitte des Stators gefertigt sind.

Praktische Untersuchungen zeigen allerdings, dass im Gebrauch bei einem aus den Blechzuschnitten fertig zusammengesetzten Stator im Jochbereich des Statorkerns, der durch die aneinander liegenden Basisabschnitte der Blechzuschnitte gebildet ist, der magnetische Fluss in einer Richtung verläuft, die jeweils sehr stark von der Vorzugsrichtung des kornorientierten Blechs abweicht. So ergeben sich bei Statoren, die nach Maßgabe der WO 95/10876 A1 aus Segmenten zusammengesetzten Blechzuschnitten bestehen, im Jochbereich des Statorkerns typischerweise Abweichungen der Flussrichtung von der Vorzugsrichtung des kornorientierten Elektroblechs von 65° bis 90°. Hieraus ergeben sich im Jochbereich des Statorkerns magnetische Eigenschaften, die schlechter sind als bei Statoren, die aus nicht kornorientierten Elektroblechzuschnitten bestehen.

Vor diesem Hintergrund hat sich die Aufgabe gestellt, einen Stator der eingangs angegebenen Art zu schaffen, bei dem mit einfachen Mitteln der Nutzen weiter optimiert ist, der sich aus der Verwendung von kornorientiertem Elektroblech für die den Stator bildenden Blechzuschnitte ergibt. Ebenso sollte ein Verfahren zur Herstellung eines solchen Stators vorgeschlagen werden.

Ein diese Aufgabe lösender Stator weist gemäß der Erfindung mindestens die in Anspruch 1 angegebenen Merkmale auf.

Ein die voranstehend angegebene Aufgabe gemäß der Erfindung lösendes Verfahren ist in Anspruch 8 angegeben.

Vorteilhafte Ausgestaltungen der Erfindung sind in den abhängigen Ansprüchen angegeben und werden wie der allgemeine Erfindungsgedanke nachfolgend im Einzelnen erläutert.

Ein erfindungsgemäßer Stator für einen Elektromotor umfasst demnach einen Statorkern, der durch ein Paket von Blechzuschnitten gebildet ist, die aus kornorientiertem Elektroblech gefertigt sind. Dabei umgrenzt der Statorkern eine Aufnahmeöffnung, die zur Aufnahme eines Rotors des Elektromotors bestimmt ist. An der der Aufnahmeöffnung zugeordneten Innenseite der Blechzuschnitte sind zahnartige Vorsprünge vorhanden, die in regelmäßigen Winkelabständen um das Zentrum der Aufnahmeöffnung verteilt angeordnet sind und aus radialer Richtung auf das Zentrum der Aufnahmeöffnung zulaufen.

Erfindungsgemäß ist nun um den Statorkern ein Wickel gelegt, der ebenfalls aus einem kornorientierten Elektroblech besteht und mehr als eine Lage des kornorientierten Elektroblechs umfasst, wobei die Vorzugsrichtung, in der die Körner des kornorientierten Elektroblechs ausgerichtet sind, aus dem der Wickel gebildet ist, um einen Abweichungswinkel von höchstens ± 25° von der Umfangsrichtung des Statorkerns abweicht.

Als Umfangsrichtung des Statorkerns wird dabei die Richtung bezeichnet, die senkrecht zur Radialrichtung und senkrecht zur Axialrichtung der vom Statorkern umgrenzten Aufnahmeöffnung ausgerichtet ist.

In der Praxis wird die hier so bezeichnete "Vorzugsrichtung", in der die Körner der erfindungsgemäß verwendeten kornorientierten Elektrobleche orientiert sind, üblicherweise fertigungsbedingt mit der Richtung ("Walzrichtung") zusammenfallen, in der die kornorientierten Bleche bei ihrer Fertigung gewalzt worden sind. Entscheidend ist jedoch nicht das Herstellverfahren, das die erfindungsgemäß verwendeten kornorientierten Elektrobleche durchlaufen haben, sondern die ausgeprägte Ausrichtung ihrer Körner und die damit einhergehende Konzentration der elektromagnetischen Eigenschaften des jeweiligen Blechs auf eine bestimmte Richtung, welche hier daher als "Vorzugsrichtung", in der die Körner des jeweiligen kornorientierten Elektroblechs ausgerichtet sind, bezeichnet wird.

Um die magnetischen Verluste im Jochbereich des Statorkerns zu reduzieren und die überlegene Eigenschaft von kornorientiertem Elektroblech vollständig zu nutzen, umfasst somit ein erfindungsgemäßer Stator, dessen Statorkern in konventioneller Weise aus Blechzuschnitten zusammengesetzt ist, die aus einem kornorientierten Elektroblech geschnitten sind, zusätzlich einen Wickel, der in mindestens einer Lage um den Jochbereich des Statorkerns gewickelt ist. Dieser Wickel besteht ebenfalls aus einem kornorientierten Elektroblech und ist so ausgerichtet, dass die Vorzugsrichtung, in der die Körner des betreffenden kornorientierten Elektroblechs ausgerichtet sind, möglichst glatt mit der Umfangsrichtung des Stators übereinstimmt, wobei Abweichungen der Vorzugsrichtung von der Umfangsrichtung von weniger als 25° toleriert werden. Weiter verbesserte Wirkungsgrade eines auf Basis eines erfindungsgemäßen Stators aufgebauten Elektromotors ergeben sich dabei, wenn der von der Vorzugsrichtung und der Umfangsrichtung eingeschlossene Winkel höchstens 20°, insbesondere höchstens 10°, beträgt, wobei sich ein optimaler Wirkungsgrad ergibt, wenn die Vorzugsrichtung des kornorientierten Elektroblechs des Wickels im technischen Sinne übereinstimmt mit der Umfangsrichtung des Stators.

Indem erfindungsgemäß ein Wickel aus kornorientiertem Elektroblech um den Statorkern gelegt wird, kann der magnetische Fluss auch in Umfangsrichtung des Statorkerns unter Ausnutzung der optimierten magnetischen Permeabilität des kornorientierten Elektroblechs des Wickels fließen, so dass auch dort allenfalls minimierte magnetische Verluste auftreten.

Im Ergebnis wird so ein Stator für einen Elektromotor erhalten, dessen magnetische Permeabilität viel besser ist als die eines Stators, dessen Blechzuschnitte in konventioneller Weise aus nicht kornorientiertem Elektroblech gefertigt sind. Mit der Erfindung werden die magnetischen Verluste, die erforderliche Magnetisierung des Stators und der Kernverlust des Statorkerns im Vergleich zu derzeit verfügbaren Statorkernen deutlich reduziert, die aus Blechzuschnitten aus kornorientiertem oder nicht kornorientiertem Elektroblech bestehen.

Ein besonderer Vorteil der Erfindung besteht auch darin, dass durch den um den Statorkern gelegten Wickel die Stabilität des Stators insgesamt so verbessert werden kann, dass die in radialer Richtung gemessene Dicke des Basisabschnitts der Blechzuschnitte, die als Paket den Statorkern bilden, auf ein Minimum reduziert werden kann. So kann bei einem erfindungsgemäßen Stator für einen Elektromotor die in radialer Richtung gemessene Dicke eines die zahnartigen Vorsprünge tragenden Basisabschnitts der Blechzuschnitte jeweils kleiner sein als die in radialer Richtung gemessene Gesamtdicke des Wickels.

Dies wiederum trägt dazu bei, dass der magnetische Fluss im Wesentlichen ausschließlich über den erfindungsgemäß vorgesehenen Wickel aus kornorientiertem Elektroblech fließt, ohne dabei durch den Basisabschnitt der Blechzuschnitte gehindert zu werden.

Zur Optimierung der elektromechanischen Eigenschaften und der Formfestigkeit eines erfindungsgemäßen Stators trägt bei, dass der erfindungsgemäß vorgesehene Wickel mehr als eine Lage des kornorientierten Elektroblechs umfasst. Dabei kann ein mehrlagiger Wickel durch ein Band gebildet werden, das aus kornorientiertem Elektroblech besteht und in ein, zwei oder mehr Umrundungen um den Statorkern geschlungen wird. Ebenso kann ein mehrlagiger Wickel auch durch schalenförmige Segmente zusammengesetzt werden, die jeweils den Statorkern um bis zu 360° seines Umfangs umgreifen.

Sowohl eine optimierte elektromagnetische, den Wirkungsgrad des jeweils auf Basis eines erfindungsgemäßen Stators aufgebauten Elektromotor erhöhende, als auch eine optimierte mechanische, die Formfestigkeit des Stators gewährleistende Wirkung des erfindungsgemäß vorgesehenen Wickels aus einem kornorientierten Elektroblech lässt sich dabei dadurch erzielen, dass der Wickel spielfrei auf dem Statorkern sitzt, so dass ein unmittelbarer, dichter Kontakt zwischen Wickel und Kern gegeben ist und insbesondere kein Luftspalt zwischen dem Wickel und dem Statorkern vorhanden ist.

Die Länge, über die sich der Wickel längs des Statorkerns erstreckt, kann in Abhängigkeit von den elektromagnetischen oder mechanischen Anforderungen gewählt werden. So kann es ausreichen, wenn sich der Wickel nur über ein Teilstück der achsparallel zur Längsachse des Statorkerns gemessenen Länge des Statorkerns erstreckt. Auch kann es zweckmäßig sein, wenn zwei oder mehr Wickel der erfindungsgemäß vorgesehenen Art in Längsrichtung des Statorkerns zueinander beabstandet um den Statorkern gelegt sind. Eine hinsichtlich der Aussteifung des Statorkerns und der elektromagnetischen Eigenschaften optimierte Ausgestaltung kann dadurch erhalten werden, dass sich der Wickel über die gesamte Länge des Statorkerns erstreckt.

Den voranstehenden Erläuterungen entsprechend umfasst ein erfindungsgemäßes Verfahren zur Herstellung eines Stators für einen Elektromotor folgende Arbeitsschritte, wobei es sich von selbst versteht, dass der Fachmann bei der Durchführung dieses Verfahrens erforderlichenfalls alle hier nicht genannten Arbeitsschritte und Maßnahmen ergänzt, die ihm aus dem Stand der Technik für diesen Zweck bekannt sind:
- Bereitstellen eines Statorkerns, der durch ein Paket von Blechzuschnitten gebildet ist, die aus kornorientiertem Elektroblech gefertigt sind, wobei der Statorkern eine Aufnahmeöffnung umgrenzt, die zur Aufnahme eines Rotors des Elektromotors bestimmt ist, und wobei an der der Aufnahmeöffnung zugeordneten Innenseite der Blechzuschnitte zahnartige Vorsprünge vorhanden sind, die in regelmäßigen Winkelabständen um das Zentrum der Aufnahmeöffnung verteilt angeordnet sind und aus radialer Richtung auf das Zentrum der Aufnahmeöffnung zulaufen,
- Umwickeln des Statorkerns mit einem kornorientierten Elektroblech zur Ausbildung eines um den Statorkern gelegten, aus dem kornorientierten Elektroblech bestehenden Wickels, der mehr als eine Lage des kornorientierten Elektroblechs umfasst, wobei die Vorzugsrichtung, in der die Körner des kornorientierten Elektroblechs ausgerichtet sind, um einen Abweichungswinkel von höchstens ± 25° von der Umfangsrichtung des Statorkerns abweicht.

Sollten innerhalb des erfindungsgemäß gebildeten Wickels aufgrund der Zugkräfte, die auf das gewickelte kornorientierte Elektroblech wirken, oder aufgrund sonstiger Einflüsse Spannungen entstehen, die beispielsweise die elektromagnetischen Eigenschaften des Blechs beeinträchtigen, so können diese Spannungen durch ein Spannungsarmglühen abgebaut werden. Hierzu kann der aus Statorkern und um ihn gelegten Wickel gebildete Stator bei einer Temperatur von 820 - 850 °C unter einer Schutzgasatmosphäre, die beispielsweise aus Stickstoff besteht, gehalten werden, wobei der Stator nach Ablauf der Glühdauer langsam mit einer Geschwindigkeit von typischerweise weniger als 50 K/h von der Glühtemperatur auf Raumtemperatur abgekühlt wird. Die Glühdauer wird dabei in Abhängigkeit von der Masse des zu glühenden Materials jeweils so gewählt, dass es zu dem gewünschten Spannungsabbau kommt. Sie kann erforderlichenfalls experimentell ermittelt werden. Eine in der Praxis geeignete Glühdauer beträgt beispielsweise mindestens 2 Stunden oder länger. Durch das Spannungsarmglühen erhält das kornorientierte Elektroblech des Wickels seine optimalen elektromagnetischen Eigenschaften zurück.

Kornorientierte Elektrobleche, die für die erfindungsgemäßen Zwecke in Frage kommen, können der Broschüre "Grain oriented electrical steel powercore - Product range", veröffentlicht von der thyssenkrupp Electrical Steel GmbH, Kurt-Schumacher-Str. 95, 45881 Gelsenkirchen, Deutschland, Ausgabe 05/2019, entnommen werden, die unter URL: https://www.thyssenkrupp-steel.com/media/content_1/produkte/elektroband/electrical_steel_integration/thy ssenkrupp_electrical_steel_product_range.pdf zum Download bereitsteht.

Nachfolgend wird die Erfindung anhand einer ein Ausführungsbeispiel darstellenden Zeichnung näher erläutert. Es zeigen jeweils schematisch:

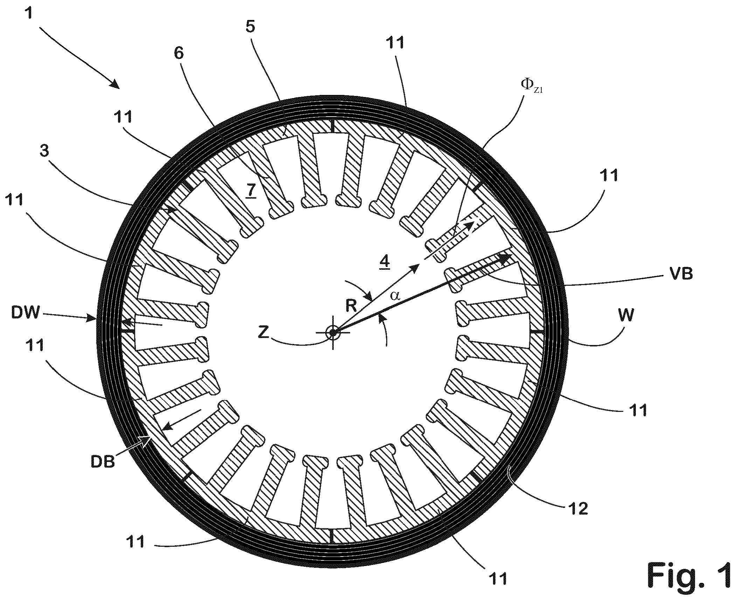

- Fig. 1: einen Stator in einem Schnitt quer zu seiner Längsachse;

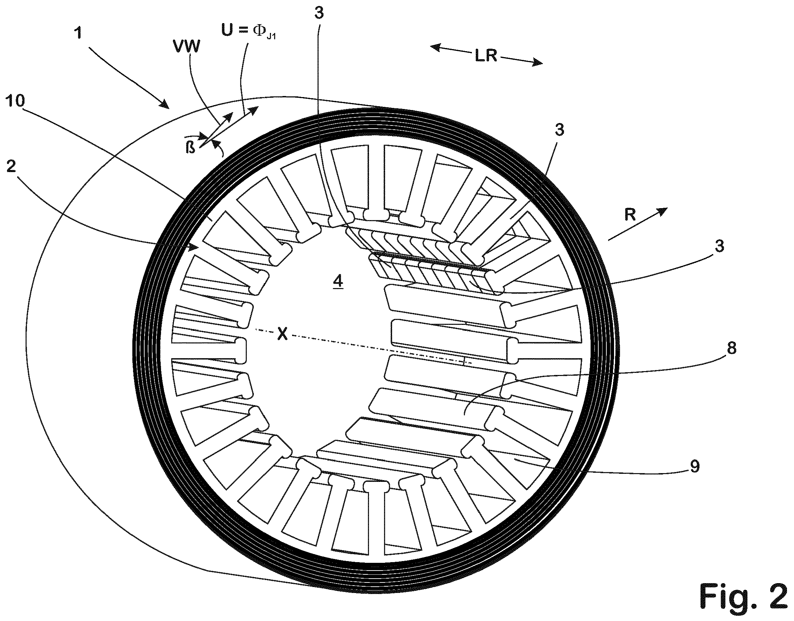

- Fig. 2: den Stator in perspektivischer Ansicht.

Der Stator 1 ist für einen Drehstrom-Elektromotor bestimmt und umfasst einen Statorkern 2 sowie einen Wickel W, der spielfrei um den Statorkern 2 gelegt ist, so dass der Wickel W fest auf dem Statorkern 2 gehalten ist.

Der Statorkern 2 ist aus einer Vielzahl von jeweils gleichen Blechzuschnitten 3 zusammengesetzt, die jeweils eine kreisrunde, ringförmige Grundform aufweisen. Sie umgrenzen eine Aufnahmeöffnung 4, die zur Aufnahme eines Rotors des auf Basis des Stators 1 zu fertigenden Elektromotors vorgesehen ist. Die Drehachse des Rotors fällt mit der Längsachse X des Statorkerns 2 zusammen, die wiederum im Zentrum Z der von den Blechzuschnitten 3 umgrenzten Aufnahmeöffnung 4 liegt.

Die Blechzuschnitte 3 besitzen einen gleichfalls ringförmigen Basisabschnitt 5 und zahnartige Vorsprünge 6, die an den Basisabschnitt 5 angeformt sind und in radialer Richtung R auf das Zentrum Z der Aufnahmeöffnung 4 zulaufend ausgerichtet sind. Jeweils benachbarte Vorsprünge 6 begrenzen seitlich eine Ausnehmung 7.

Zur Herstellung des Statorkerns 2 wird eine hierzu erforderliche Anzahl von Blechzuschnitten 3 zu einem Paket aufeinander gestapelt. Die dann aneinander liegenden Vorsprünge 6 bilden Leisten 8, die seitliche Nuten 9 begrenzen, die durch die Ausnehmungen 7 der Blechzuschnitte 3 gebildet sind. In den Nuten 9 liegen beim auf Basis des Stators 1 hergestellten Elektromotor in konventioneller Weise hier nicht gezeigte Wicklungen eines elektrischen Leiters. Gleichzeitig bilden die Basisabschnitte 5 der aneinander liegenden Blechzuschnitte 3 einen Jochbereich 10 des Statorkerns 2, dessen äußere zylindrische Umfangsfläche den Statorkern 2 nach außen begrenzt.

Die Blechzuschnitte 3 sind in der beispielsweise in der WO 95/10876 A1 beschriebenen Weise beispielsweise aus sechs kreisbogenförmigen Einzelsegmenten 11 zusammengesetzt, die beispielsweise durch Stanzen oder eine andere hierzu aus dem Stand der Technik bekannte Verfahrensweise aus einem kornorientierten Elektroblech geschnitten sind. Das kornorientierte Elektroblech der Blechzuschnitte 3 weist eine hier mit seiner Walzrichtung zusammenfallende Vorzugsrichtung VB auf, in der die Körner des betreffenden kornorientierten Elektroblechs orientiert sind.

Die Anzahl der Einzelsegmente 11 ist dabei so gewählt, dass die Vorzugsrichtung VB an jeder Stelle des betreffenden Einzelsegments 11 um einen Abweichungswinkel α von weniger als 25° abweicht von der bezogen auf das Zentrum Z der Aufnahmeöffnung 4 des Stators 1 radialen Richtung R an der betreffenden Stelle.

Der an dem Statorkern 2 fixierte Wickel W besteht aus einem Band, das von einem kornorientierten Elektroblech abgeteilt und mehrfach um den Statorkern 2 geschlungen ist. Dabei ist der Wickel W so ausgerichtet, dass die auch hier mit der Walzrichtung zusammenfallende Vorzugsrichtung VW, in der die Körner des kornorientierten Elektroblechs orientiert sind, aus dem der Wickel W besteht, um einen Abweichungswinkel β von weniger als 25° von der quer zur radialen Richtung R und quer zur achsparallel zur Längsachse X ausgerichteten Längsrichtung LR ausgerichteten Umfangsrichtung U des Statorkerns 2 abweicht. Optimalerweise sind die Lagen 12 des Wickels W dabei so ausgerichtet, dass die Vorzugsrichtung VW im technischen Sinne mit der Umfangsrichtung U übereinstimmt.

Die Lagen 12 des Wickels W erstrecken sich über die gesamte in Längsrichtung LR gemessene Länge des Statorkerns 2. Sie sind in den Figuren zur Verdeutlichung mit einem Abstand zwischen ihnen dargestellt, liegen jedoch in der Praxis dicht an dicht aufeinander, so dass der Wickel W eine kompakte Einheit bildet. Die in radialer Richtung R gemessene Gesamtdicke DW des Wickels W ist dabei größer als die ebenfalls in radialer Richtung R gemessene Dicke DB des die zahnartigen Vorsprünge 6 tragenden Basisabschnitts 5 der Blechzuschnitte 3.

Beim Betrieb eines Elektromotors, der auf Basis des Stators 1 aufgebaut ist, fließt der Magnetfluss Φ_{Z1} im Bereich der zahnartigen Vorsprünge 6 in radialer Richtung R, die nahe der Vorzugsrichtung VB der Einzelsegmente 11 liegt, wobei der Abweichungswinkel α zwischen der Vorzugsrichtung VB und der jeweiligen radialen Richtung R, in der der Magnetfluss Φ_{Z1} fließt, in jedem Fall kleiner als 25° ist. Im Bereich der zahnartigen Vorsprünge 6 ist auf diese Weise die magnetische Permeabilität der aus kornorientiertem Elektroblech bestehenden Einzelsegmente 11 und der aus ihnen zusammengesetzten Blechzuschnitte 3 viel besser als bei Blechzuschnitten, die aus nicht kornorientiertem Elektroblech bestehen.

Gleichzeitig fließt im Jochbereich 10 der Magnetfluss Φ_{J1} innerhalb des Stators 1 in Umfangsrichtung U, an die die Vorzugsrichtung VW angenähert ist, in der das kornorientierte Elektroblech, aus dem der Wickel W besteht, überlegene magnetische Eigenschaften besitzt. Der Abweichungswinkel β zwischen der Umfangsrichtung U und der Vorzugsrichtung VW geht hier beispielsweise gegen 0, so dass die in der Vorzugsrichtung VW maximalen magnetischen Eigenschaften des kornorientierten Elektroblechs, aus dem der Wickel W besteht, optimal genutzt werden. Allenfalls im Sättigungszustand fließt auf diese Weise ein geringer Streufluss durch den Jochbereich 10 des Statorkerns 2.

### BEZUGSZEICHEN

- 1: Stator
- 2: Statorkern
- 3: Blechzuschnitt
- 4: Aufnahmeöffnung
- 5: Basisabschnitt des Blechzuschnitts 3
- 6: zahnartige Vorsprünge des Blechzuschnitts 3
- 7: Ausnehmungen des Blechzuschnitts 3
- 8: aus den zahnartigen Vorsprüngen 6 gebildete Leisten
- 9: durch die Ausnehmungen 7 gebildete Nuten
- 10: Jochbereich des Statorkerns 2
- 11: Einzelsegmente des Blechzuschnitts 3
- 12: Lagen des Wickels W
- α: Abweichungswinkel
- β: Abweichungswinkel
- DB: Dicke des Basisabschnitts 5
- DW: Gesamtdicke des Wickels W
- LR: Längsrichtung des Statorkerns
- R: radiale Richtung
- U: Umfangsrichtung des Statorkerns 2
- VB: Vorzugsrichtung des kornorientierten Elektroblechs des Blechzuschnitts 3
- VW: Vorzugsrichtung des kornorientierten Elektroblechs des Wickels W
- W: Wickel
- X: Längsachse
- Z: Zentrum der Aufnahmeöffnung 4
- Φ_{Z1}: Magnetfluss in den zahnartigen Vorsprüngen 6
- Φ_{J1}: Magnetfluss im Jochbereich 10

## Patentansprüche

1. Stator für einen Elektromotor, wobei der Stator (1) einen Statorkern (2) umfasst, der durch ein Paket von Blechzuschnitten (3) gebildet ist, die aus kornorientiertem Elektroblech gefertigt sind, wobei der Statorkern (2) eine Aufnahmeöffnung (4) umgrenzt, die zur Aufnahme eines Rotors des Elektromotors bestimmt ist, und wobei an der der Aufnahmeöffnung (4) zugeordneten Innenseite der Blechzuschnitte (3) zahnartige Vorsprünge (6) vorhanden sind, die in regelmäßigen Winkelabständen um das Zentrum (Z) der Aufnahmeöffnung (4) verteilt angeordnet sind und aus radialer Richtung (R) auf das Zentrum (Z) der Aufnahmeöffnung (4) zulaufen, **dadurch gekennzeichnet, dass** um den Statorkern (2) ein Wickel (W) gelegt ist, der ebenfalls aus einem kornorientierten Elektroblech besteht und mehr als eine Lage (12) des kornorientierten Elektroblechs umfasst, wobei die Vorzugsrichtung (VW), in der die Körner des kornorientierten Elektroblechs ausgerichtet sind, aus dem der Wickel (W) gebildet ist, um einen Abweichungswinkel (β) von höchstens ± 25° von der Umfangsrichtung (U) des Statorkerns (2) abweicht.

2. Stator nach Anspruch 1, **dadurch gekennzeichnet, dass** der Abweichungswinkel (β) höchstens 20° beträgt.

3. Stator nach einem der voranstehenden Ansprüche, **dadurch gekennzeichnet, dass** der Abweichungswinkel (β) höchstens 10° beträgt.

4. Stator nach einem der voranstehenden Ansprüche, **dadurch gekennzeichnet, dass** die Vorzugsrichtung (VW), in der die Körner des kornorientierten Elektroblechs ausgerichtet sind, aus dem der Wickel (W) gebildet ist, gleich der Walzrichtung des kornorientierten Elektroblechs ist.

5. Stator nach einem der voranstehenden Ansprüche, **dadurch gekennzeichnet, dass** der Wickel (W) spielfrei fest auf der Umfangsfläche des Statorkerns (2) sitzt.

6. Stator nach einem der voranstehenden Ansprüche, **dadurch gekennzeichnet, dass** sich der Wickel (W) über die gesamte Länge des Statorkerns (2) erstreckt.

7. Stator nach einem der voranstehenden Ansprüche, **dadurch gekennzeichnet, dass** die in radialer Richtung (R) gemessene Dicke (DB) eines die zahnartigen Vorsprünge (6) tragenden Basisabschnitts (5) der Blechzuschnitte (3) jeweils kleiner ist als die in radialer Richtung (R) gemessene Gesamtdicke (DW) des Wickels (W).

8. Verfahren zur Herstellung eines gemäß einem der Ansprüche 1 bis 7 ausgebildeten Stators für einen Elektromotor umfassend folgende Arbeitsschritte:
- Bereitstellen eines Statorkerns (2), der durch ein Paket von Blechzuschnitten (3) gebildet ist, die aus kornorientiertem Elektroblech gefertigt sind, wobei der Statorkern (2) eine Aufnahmeöffnung (4) umgrenzt, die zur Aufnahme eines Rotors des Elektromotors bestimmt ist, und wobei an der der Aufnahmeöffnung (4) zugeordneten Innenseite der Blechzuschnitte (3) zahnartige Vorsprünge (6) vorhanden sind, die in regelmäßigen Winkelabständen um das Zentrum (Z) der Aufnahmeöffnung (4) verteilt angeordnet sind und aus radialer Richtung (R) auf das Zentrum (Z) der Aufnahmeöffnung (4) zulaufen, **gekennzeichnet durch**
- Umwickeln des Statorkerns (2) mit einem kornorientierten Elektroblech zur Ausbildung eines um den Statorkern (2) gelegten, aus dem kornorientierten Elektroblech bestehenden Wickels (W), der mehr als eine Lage (12) des kornorientierten Elektroblechs umfasst, wobei die Vorzugsrichtung (VW), in der die Körner des kornorientierten Elektroblechs ausgerichtet sind, um einen Abweichungswinkel (β) von höchstens ± 25° von der Umfangsrichtung (U) des Statorkerns (2) abweicht.

9. Verfahren nach Anspruch 8, **dadurch gekennzeichnet, dass** der Stator (1), nach dem der aus dem kornorientierten Elektroblech gebildete Wickel (W) um ihn gelegt ist, einer Glühbehandlung unterzogen wird, um in dem Wickel (W) vorhandene Spannungen abzubauen.

## Claims

1. Stator for an electric motor, wherein the stator (1) comprises a stator core (2) which is formed by a stack of sheet-metal blanks (3) produced from grain-oriented electrical steel sheet, wherein the stator core (2) delimits a receiving opening (4) which is intended for receiving a rotor of the electric motor, and wherein tooth-like projections (6) are present on the inner side of the sheet-metal blanks (3) associated with the receiving opening (4), said projections being arranged distributed at regular angular intervals around the centre (Z) of the receiving opening (4) and extending from a radial direction (R) towards the centre (Z) of the receiving opening (4), **characterized in that** a winding (W) is placed around the stator core (2), which likewise consists of a grain-oriented electrical steel sheet and comprises more than one layer (12) of the grain-oriented electrical steel sheet, wherein the preferred direction (VW), in which the grains of the grain-oriented electrical steel sheet from which the winding (W) is formed are aligned, deviates by an angle of deviation (β) of at most ± 25° from the circumferential direction (U) of the stator core (2).

2. Stator according to claim 1, **characterized in that** the angle of deviation (β) is at most 20°.

3. Stator according to any one of the preceding claims, **characterized in that** the angle of deviation (β) is at most 10°.

4. Stator according to any one of the preceding claims, **characterized in that** the preferred direction (VW), in which the grains of the grain-oriented electrical steel sheet are aligned, from which the winding (W) is formed, is the same as the rolling direction of the grain-oriented electrical steel sheet.

5. Stator according to any one of the preceding claims, **characterized in that** the winding (W) is seated firmly without play on the circumferential surface of the stator core (2).

6. Stator according to any one of the preceding claims, **characterized in that** the winding (W) extends over the entire length of the stator core (2).

7. Stator according to any one of the preceding claims, **characterized in that** the thickness (DB), measured in the radial direction (R), of a base portion (5) of the sheet-metal blanks (3) carrying the tooth-like projections (6) is in each case smaller than the total thickness (DW), measured in the radial direction (R), of the winding (W).

8. Method for producing a stator for an electric motor according to any one of claims 1 to 7, comprising the following working steps:
- providing a stator core (2), which is formed by a stack of sheet-metal blanks (3) produced from grain-oriented electrical steel sheet, wherein the stator core (2) delimits a receiving opening (4) which is intended for receiving a rotor of the electric motor, and wherein tooth-like projections (6) are present on the inner side of the sheet-metal blanks (3) associated with the receiving opening (4), said projections being arranged distributed at regular angular intervals around the centre (Z) of the receiving opening (4) and extending from a radial direction (R) towards the centre (Z) of the receiving opening (4), **characterized by**
- wrapping the stator core (2) with a grain-oriented electrical steel sheet to form a winding (W) placed around the stator core (2) that consists of the grain-oriented electrical steel sheet, said winding comprising more than one layer (12) of the grain-oriented electrical steel sheet, wherein the preferred direction (VW), in which the grains of the grain-oriented electrical steel sheet are aligned, deviates by an angle of deviation (β) of at most ± 25° from the circumferential direction (U) of the stator core (2).

9. Method according to claim 8, **characterized in that** the stator (1), after the winding (W) formed from the grain-oriented electrical steel sheet has been placed around it, is subjected to an annealing treatment in order to relieve stresses present in the winding (W).

## Revendications

1. Stator pour un moteur électrique, le stator (1) comprenant un cœur de stator (2) qui est formé par un empilement de découpes de tôle (3) fabriquées en tôle électrique à grains orientés, le cœur de stator (2) délimitant une ouverture de réception (4) destinée à recevoir un rotor du moteur électrique, et des saillies dentiformes (6) étant présentes sur le côté intérieur des découpes de tôle (3) associé à l'ouverture de réception (4), lesquelles sont disposées réparties à des intervalles angulaires réguliers autour du centre (Z) de l'ouverture de réception (4) et s'étendent depuis une direction radiale (R) vers le centre (Z) de l'ouverture de réception (4), **caractérisé en ce qu'**un enroulement (W) est disposé autour du cœur de stator (2), lequel est également constitué d'une tôle électrique à grains orientés et comprend plus d'une couche (12) de la tôle électrique à grains orientés, la direction préférentielle (VW), dans laquelle les grains de la tôle électrique à grains orientés à partir de laquelle l'enroulement (W) est formé sont orientés, s'écartant d'un angle d'écart (β) d'au plus ± 25° de la direction circonférentielle (U) du cœur de stator (2).

2. Stator selon la revendication 1, **caractérisé en ce que** l'angle d'écart (β) est d'au plus 20°.

3. Stator selon l'une quelconque des revendications précédentes, **caractérisé en ce que** l'angle d'écart (β) est d'au plus 10°.

4. Stator selon l'une quelconque des revendications précédentes, **caractérisé en ce que** la direction préférentielle (VW), dans laquelle les grains de la tôle électrique à grains orientés à partir de laquelle l'enroulement (W) est formé sont orientés, est identique à la direction de laminage de la tôle électrique à grains orientés.

5. Stator selon l'une quelconque des revendications précédentes, **caractérisé en ce que** l'enroulement (W) est assis fermement et sans jeu sur la surface circonférentielle du cœur de stator (2).

6. Stator selon l'une quelconque des revendications précédentes, **caractérisé en ce que** l'enroulement (W) s'étend sur toute la longueur du cœur de stator (2).

7. Stator selon l'une quelconque des revendications précédentes, **caractérisé en ce que** l'épaisseur (DB), mesurée dans la direction radiale (R), d'une section de base (5) des découpes de tôle (3) portant les saillies dentiformes (6) est respectivement inférieure à l'épaisseur totale (DW), mesurée dans la direction radiale (R), de l'enroulement (W).

8. Procédé de fabrication d'un stator pour un moteur électrique conçu selon l'une quelconque des revendications 1 à 7, comprenant les étapes de travail suivantes :
- mise à disposition d'un cœur de stator (2), qui est formé par un empilement de découpes de tôle (3) fabriquées en tôle électrique à grains orientés, le cœur de stator (2) délimitant une ouverture de réception (4) destinée à recevoir un rotor du moteur électrique, et des saillies dentiformes (6) étant présentes sur le côté intérieur des découpes de tôle (3) associé à l'ouverture de réception (4), lesquelles sont disposées réparties à des intervalles angulaires réguliers autour du centre (Z) de l'ouverture de réception (4) et s'étendent depuis une direction radiale (R) vers le centre (Z) de l'ouverture de réception (4),
**caractérisé par**
- l'enroulement du cœur de stator (2) avec une tôle électrique à grains orientés afin de former un enroulement (W) disposé autour du cœur de stator (2) et constitué de la tôle électrique à grains orientés, lequel comprend plus d'une couche (12) de la tôle électrique à grains orientés, la direction préférentielle (VW), dans laquelle les grains de la tôle électrique à grains orientés sont orientés, s'écartant d'un angle d'écart (β) d'au plus ± 25° de la direction circonférentielle (U) du cœur de stator (2).

9. Procédé selon la revendication 8, **caractérisé en ce que** le stator (1), après que l'enroulement (W) formé à partir de la tôle électrique à grains orientés a été disposé autour de celui-ci, est soumis à un traitement de recuit afin de réduire les contraintes présentes dans l'enroulement (W).
